## Europäisches Patentamt
## European Patent Office
## Office européen des brevets

(19)

(11) Veröffentlichungsnummer: **0 059 986**
**B1**

(12) # EUROPÄISCHE PATENTSCHRIFT

(45) Veröffentlichungstag der Patentschrift:
02.01.85

(21) Anmeldenummer: **82101922.1**

(22) Anmeldetag: **10.03.82**

(51) Int. Cl.³: **C 04 B 33/32,** F 27 D 3/12,
F 27 D 5/00

(54) **Kassette und Verfahren zum Brennen von keramischen Formlingen.**

(30) Priorität: **11.03.81 DE 3109146**
**29.01.82 DE 3202909**

(43) Veröffentlichungstag der Anmeldung:
**15.09.82 Patentblatt 82/37**

(45) Bekanntmachung des Hinweises auf die Patenterteilung:
**02.01.85 Patentblatt 85/1**

(84) Benannte Vertragsstaaten:
**AT BE CH DE FR GB IT LI NL SE**

(56) Entgegenhaltungen:
**CH - A - 605 463**
**DE - U - 7 735 369**
**US - A - 1 906 785**

(73) Patentinhaber: **Hässler, Andreas, Jahnstrasse 45,**
**D-7904 Erbach (DE)**

(72) Erfinder: **Hässler, Andreas, Jahnstrasse 45,**
**D-7904 Erbach (DE)**

(74) Vertreter: **Thielking, Bodo, Dipl.-Ing. et al, Patentanwälte**
**Dipl.-Ing. Bodo Thielking Dipl.-Ing. Otto Elbertzhagen**
**Gadderbaumer Strasse 20, D-4800 Bielefeld 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft eine Kassette zum Brennen von keramischen Formlingen, insbesondere von Tonziegeln, einen daraus gebildeten Kassettenstapel und ein Verfahren zum Brennen der keramischen Formlinge in diesen Kassetten.

Kassetten zum Brennen von keramischen Formlingen sind in verschiedenen Ausführungen bekannt. Die Kassetten nehmen die keramischen, meist plattenförmigen Formlinge auf und werden auf Brennwagen übereinander gestapelt. Das Brennen der keramischen Formlinge in derartige Kassetten erfolgt bisher überwiegend in Tunnelöfen mit Gas- oder Ölfeuerung. Zur Befeuerung der Tunnelöfen mit Festbrennstoffen ist es auch bereits bekannt, Fein- oder Staubkohle in die Tunnelöfen zu blasen. Dies führt zu unerwünschten hohen Staubemissionen und zu einem ebenso unerwünschten Verschmutzen der Brennwagen.

Es ist auch bereits bekannt (US-A-1 906 785), den Formling in einer Kassette aus keramischem Material in ein Gemisch aus Sand und festem Brennstoff einzubetten und diese Kassette in den Brennofen einzuführen. Ein solches Verfahren ist einerseits extrem umständlich und hat außerdem zur Folge, daß das Brenngut unerträglich verschmutzt ist. Sowohl das Brenngut als auch die Kassette müssen nach dem Brennen in extrem aufwendiger Weise gereinigt werden. Darüber hinaus lassen sich mit diesem aufwendigen Brennverfahren nur keramische Erzeugnisse minderer Qualität behandeln, nicht hingegen Brennerzeugnisse, bei denen hohe Anforderungen an die Qualität der Oberfläche gestellt werden.

Der Erfindung liegt die Aufgabe zugrunde, eine Kassette zum Brennen von keramischen Formlingen mit festem Brennstoff, einen daraus gebildeten Kassettenstapel sowie ein Verfahren zum Brennen keramischer Formlinge in derartige Kassetten zu schaffen.

Die neue Kassette und das neue Verfahren sollen die Nachteile der bisher bekannten Verfahren zum Befeuern mit festen Brennstoffen vermeiden und eine saubere Beheizung der Tunnelöfen mit Festbrennstoffen ohne Verschmutzung der Brennwagen und der Formlinge sowie ohne Staubemission ermöglichen. Es soll außerdem möglich sein, den Brennstoff im Ofenraum entsprechend dem Wärmebedarf unterschiedlich über den Ofenquerschnitt zu verteilen. Es soll ferner die Verwendung auch von minderwertigen Brennstoffen möglich sein.

Die Lösung dieser Aufgabe erfolgt nach der Erfindung dadurch, daß zwischen Kassettenboden und Formlingen fester Brennstoff angeordnet ist und für die Formlinge Auflagebereiche über dem festen Brennstoff vorgesehen sind.

Dabei ist es zweckmäßig, daß im Kassettenboden Vertiefungen zur Aufnahme des festen Brennstoffs vorgesehen sind.

Die Kassetten werden vor dem Beschicken mit den keramischen Formlingen zunächst mit Brennstoff befüllt, danach erfolgt das Beschicken mit den keramischen Formlingen. Schließlich werden die mit Brennstoff und keramischen Formlingen befüllten Kassetten über- und nebeneinander auf den Brennwagen gestapelt.

Dabei ist es möglich, durch ein programmiertes Einfüllen von Kohle in die Kassetten, z. B. in die unteren Kassettenreihen auf den Brennwagen, wo der Wärmeverbrauch spezifisch größer ist als in den oberen Kassettenreihen, größere Brennstoffmengen aufzugeben. Es kann also eine Brennstoffverteilung gezielt nach dem speziellen Wärmebedarf der jeweiligen Kassette erfolgen.

Bei der Verwendung dieser Kassetten bleiben sowohl die keramischen Ziegel als auch die Brennwagen aschefrei und es ist möglich, die gesamte zum Brennen erforderliche Brennstoffmenge ausschließlich über die Befüllung der Kassetten zuzuführen. Zur Entaschung genügt es, die Kassetten nach dem Entnehmen der gebrannten Formlinge zu kippen, so daß die Asche herausfällt. Bei Bedarf können auch noch zusätzliche Reinigungsvorrichtungen, wie beispielsweise rotierende Bürsten oder Absaugeinrichtungen vorgesehen sein.

Da die keramischen Formlinge gruppenweise aneinandergereiht in den Kassetten stehen, bilden ihre Zwischenräume einen guten Luftzutritt zur Verbrennung der Kohle in den Kassetten. Bei einem Brennwärmebedarf von beispielsweise ca. 1200 kJ/kg gebranntes Gut genügt das Ausbreiten des Brennstoffs in wenigen Zentimetern Schichthöhe.

Bei der Verwendung von gasreichen festen Brennstoffen ist es vorteilhaft, den Tunnelofen nach dem Verfahren gemäß dem deutschen Patent 26 43 406 zu betreiben. Bei der Anwendung dieses Brennverfahrens wird erreicht, daß unverbrannt in der Anwärmezone entweichende flüchtige Brennstoffbestandteile durch die Rückführung in die Feuerzone dennoch verbrennen.

Gemäß einem weiteren Merkmal der Erfindung sind die Distanzstücke der Kassetten als lose Teile ausgebildet.

Es hat sich als vorteilhaft erwiesen, daß die Kassette im Querschnitt U-förmig, L-förmig oder H-förmig ausgebildet ist.

Es ist vorteilhaft, daß die Auflagebereiche für die keramischen Formlinge durch gelochte oder profilierte Platten gebildet werden.

Solche gelochten oder profilierten Platten wirken als Tragorgane und als Zwischenabdeckung des Brennstoffs.

Durch das Vorsehen solcher Platten wird das Brenngut auf indirekte Art erwärmt und je nach den Erfordernissen kann die Zwischenabdeckung so ausgeführt werden, daß überhaupt keine Heizgase oder vorbestimmte Mengen von Heizgasen hindurchdringen können.

Gemäß einem weiteren Vorschlag der Erfindung ist das Verfahren zum Brennen von keramischen Formlingen in den erfindungsgemäßen Kassetten dadurch gekennzeichnet, daß die Befüllung mit dem festen Brennstoff in einem Kassettenumlauf zwischen einer Belade- und einer Entladestation erfolgt.

Die Kassetten werden jeweils vor der Befüllung mit festem Brennstoff durch Kippen von der Asche entleert und gegebenenfalls gereinigt.

Weiterhin ist es zweckmäßig, daß mindestens einige der Kassetten mit mehr Brennstoff beschickt sind, als er für das Brennen in diesen Kassetten erforderlich ist. Mit dem Wärmeüberschuß kann dann mindestens ein weiteres keramisches Produkt mitgebrannt werden. Dabei kann es sich bei dem mitgebrannten Produkt um jede Art von keramischem Produkt handeln. Es ist beispielsweise möglich, auf einem Brennwagen die mit Brennstoffüberschuß beschickten Kassetten zu stapeln und einen oder mehrere weitere Brennwagen mit Formlingen zu beladen, die nicht in Kassetten angeordnet sind. Es ist auch möglich, die Überschußwärme außerhalb des Ofens zu verwenden.

Schließlich wird erfindungsgemäß noch vorgeschlagen, daß in unterschiedlichen Kassetten unterschiedliche Brennstoffmengen und/oder Brennstoffqualitäten verteilt werden. Dabei kann die Wahl der Brennstoffmengen und/oder Brennstoffqualitäten in Abhängigkeit von den jeweils herrschenden Wärmebedarfsverhältnissen erfolgen.

Nachstehend werden bevorzugte Ausführungsformen der Erfindung anhand der Zeichnung beschrieben. Es zeigt

Fig. 1 eine Seitenansicht einer ersten Ausführungsform einer Kassette,

Fig. 2 eine Draufsicht auf die Kassette gemäß Fig. 1,

Fig. 3 einen Schnitt durch die Kassette entlang Ebene III-III in Fig. 2,

Fig. 4 eine Seitenansicht einer zweiten Ausführungsform der Kassette,

Fig. 5 eine Draufsicht auf die Kassette gemäß Fig. 4,

Fig. 6 einen Schnitt entlang Ebene VI-VI gemäß Fig. 5,

Fig. 7 einen Längsschnitt durch eine dritte Ausführungsform mit Tragplatte,

Fig. 8 einen Querschnitt entlang Ebene VIII-VIII in Fig. 7.

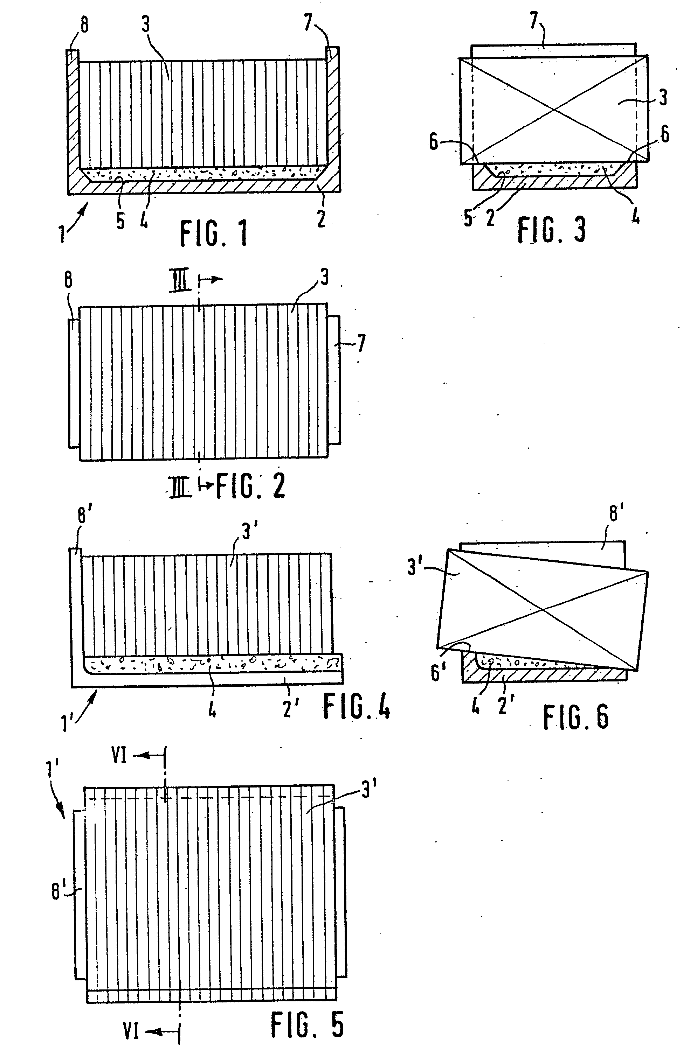

In den unterschiedlichen Zeichnungsfiguren sind die einander entsprechenden Teile mit gleichen Bezugszeichen versehen. Bei den unterschiedlichen Ausführungsformen ist eine unterschiedliche Anzahl von Hochstrichen vorgesehen. Die Beschreibung erfolgt im wesentlichen anhand der Ausführungsform gemäß Fig. 1 bis 3.

Eine Kassette 1 besitzt einen Kassettenboden 2. In dem Kassettenboden 2 befindet sich eine muldenförmige Vertiefung 5, die zur Aufnahme von festem Brennstoff 4, beispielsweise zur Aufnahme von gekörnter Kohle dient. Die Formlinge 3 liegen auf Auflagebereichen 6 in einem Abstand über der festen Brennstoffschicht 4.

Bei der Ausführungsform gemäß Fig. 1 besitzt die Kassette 1 eine U-förmige Gestalt. Die seitlichen aufwärts ragenden Schenkel dienen als Distanzstücke 7 und 8, welche die darüber anzuordnende Kassette zu tragen haben.

Bei der Ausführungsform gemäß Fig. 4 bis 6 besitzt die Kassette eine etwa L-förmige Gestalt. In dieser Kassette sind die Formlinge 3 geneigt angeordnet. Sie liegen ebenfalls auf einem Auflagebereich 6'. Über dem Kassettenboden 2' befindet sich der feste Brennstoff 4. Das Distanzstück 8' ist an einer Stirnseite der Kassette vorgesehen.

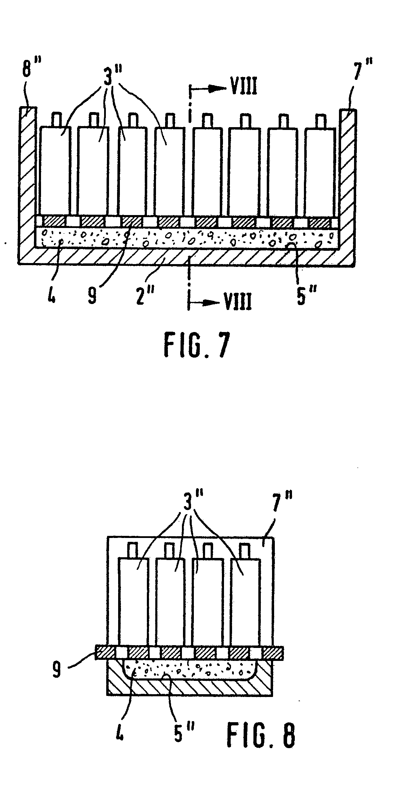

Die Ausführungsform gemäß Fig. 7 und 8 besitzt eine der Ausführungsform gemäß Fig. 1 bis 3 sehr ähnliche Gestalt, ist also ebenfalls U-förmig ausgebildet. Der feste Brennstoff 4 befindet sich in einer Vertiefung 5" im Kassettenboden 2". Auf den Rändern der Vertiefung 5" liegt eine gelochte Platte 9 auf, welche die Formlinge 3" trägt. An den Stirnseiten der Kassette 1" sind die Distanzstücke 7" und 8" angeordnet.

### Patentansprüche

1. Kassette zum Brennen von keramischen Formlingen, insbesondere Tonziegeln, mit einem Kassettenboden und mindestens einem nach oben weisenden Distanzstück und mit in der Kassette angeordneten Formlingen, dadurch gekennzeichnet, daß zwischen Kassettenboden (2) und Formlingen (3) fester Brennstoff (4) angeordnet ist und für die Formlinge (3) Auflagebereiche (6) über dem festen Brennstoff (4) vorgesehen sind.

2. Kassette nach Anspruch 1, dadurch gekennzeichnet, daß im Kassettenboden (2) Vertiefungen (5) zur Aufnahme des festen Brennstoffs (4) vorgesehen sind.

3. Kassette nach einem oder mehreren der Ansprüche 1 bis 2, dadurch gekennzeichnet, daß die Distanzstücke (7; 8) als lose Teile ausgebildet sind.

4. Kassette nach einem oder mehreren der Ansprüche 1 bis 3, dadurch gekennzeichnet, daß sie im Querschnitt U-förmig ausgebildet ist.

5. Kassette nach einem oder mehreren der Ansprüche 1 bis 3, dadurch gekennzeichnet, daß sie im Querschnitt L-förmig ausgebildet ist.

6. Kassette nach einem oder mehreren der Ansprüche 1 bis 5, dadurch gekennzeichnet, daß die Auflagebereiche gelochte Platten (9) sind.

7. Kassette nach einem oder mehreren der Ansprüche 1 bis 6, dadurch gekennzeichnet, daß die Auflagebereiche profilierte Platten sind.

8. Verfahren zum Brennen von keramischen Formlingen in Kassetten nach einem oder mehreren der Ansprüche 1 bis 7, dadurch gekennzeichnet, daß die Befüllung mit dem festen Brennstoff (4) in einem Kassettenumlauf zwischen einer Belade- und einer Entladestation erfolgt.

9. Verfahren zum Brennen von keramischen Formlingen in Kassetten nach einem oder mehreren der Ansprüche 1 bis 8, dadurch gekennzeichnet, daß die Kassetten (1) jeweils vor der Befüllung mit festem Brennstoff (4) durch Kippen von der Asche entleert werden.

10. Verfahren zum Brennen von keramischen Formlingen in Kassetten nach einem oder mehreren der Ansprüche 1 bis 9, dadurch gekennzeichnet, daß mindestens einige der Kassetten (1) mit mehr Brennstoff beschickt sind, als für das Brennen in diesen Kassetten (1) erforderlich ist, und daß mit dem Wärmeüberschuß mindestens ein weiteres keramisches Produkt mitgebrannt wird.

11. Verfahren zum Brennen von keramischen Formlingen in Kassetten nach einem oder mehreren der Ansprüche 1 bis 10, dadurch gekennzeichnet, daß in unterschiedlichen Kassetten (1) unterschiedliche Brennstoffmengen und/oder Brennstoffqualitäten verteilt werden.

12. Kassettenstapel aus über- und nebeneinander gestapelten Kassettenböden und zwischen den Kassettenböden angeordneten Distanzstücken, dadurch gekennzeichnet, daß zwischen Kassettenböden (2) und Formlingen (3) fester Brennstoff (4) angeordnet ist und für die Formlinge (3) Auflagebereiche (6) über dem festen Brennstoff (4) vorgesehen sind.

## Claims

1. Cassette for burning ceramic blanks, in particular clay tiles, with a cassette bottom and at least one upward-pointing spacer and with blanks arranged in the cassette, characterised in that solid fuel (4) is located between the cassette bottom (2) and the blanks (3), and resting zones (6) for the blanks (3) are provided above the solid fuel (4).

2. Cassette according to Claim 1, characterised in that depressions (5) which are to receive the solid fuel (4) are provided in the cassette bottom (2).

3. Cassette according to one or more of Claims 1 to 2, characterised in that the spacer (7; 8) are made as loose parts.

4. Cassette according to one or more of Claims 1 to 3, characterised in that it has a U-shaped cross-section.

5. Cassette according to one or more of Claims 1 to 3, characterised in that it has a L-shaped cross-section.

6. Cassette according to one or more of Claims 1 to 5, characterised in that the resting zones are perforated plates (9).

7. Cassette according to one or more of Claims 1 to 6, characterised in that the resting zones are profiled plates.

8. Process for burning ceramic blanks in cassettes according to one or more of Claims 1 to 7, characterised in that filling with solid fuel (4) takes place in a cassette circulation between a loading station and a discharging station.

9. Process for burning ceramic blanks in cassettes according to one or more of Claims 1 to 8, characterised in that ash is removed from the cassettes (1) by tilting each time before they are filled with solid fuel (4).

10. Process for burning ceramic blanks in cassettes according to one or more of Claims 1 to 9, characterised in that at least some of the cassettes (1) are charged with more fuel than is required for burning in these cassettes (1), and that at least one further ceramic product is also burned by means of the excess heat.

11. Process for burning ceramic blanks in cassettes according to one or more of Claims 1 to 10, characterised in that different quantities of fuel and/or grades of fuel are distributed over the various cassettes (1).

12. Cassette stack consisting of cassette bottoms stacked one above the other and next to one another, and of spacers arranged between the cassette bottoms, characterised in that solid fuel (4) is located between the cassette bottoms (2) and the blanks (3), and resting zones (6) for the blanks (3) are provided above the solid fuel (4).

## Revendications

1. Cassette pour la cuisson d'ébauches céramiques, et en particulier de briques d'argile, avec un fond de cassette et au moins une entretoise, dirigée vers le haut, et avec des ébauches disposées dans la cassette, caractérisée en ce que le combustible solide (4) est disposé entre le fond de cassette (2) et les ébauches (3) et en ce que des zones de support (6) sont prévues pour les ébauches (3) au-dessus du combustible solide (4).

2. Cassette selon la revendications 1, caractérisée en ce que des creux (5) sont prévus dans le fond de cassette (2) pour recevoir le combustible solide (4).

3. Cassette selon une ou plusieurs des revendications 1 à 2, caractérisée en ce que les entretoises (7, 8) sont constittuées de pièces amovibles.

4. Cassette selon une ou plusieurs des revendications 1 à 3, caractérisée en ce qu'elle présente une section en forme de U.

5. Cassette selon une ou plusieurs des revendications 1 à 3, caractérisée en ce qu'elle présente une section en forme de L.

6. Cassette selon une ou plusieurs des revendications 1 à 5, caractérisée en ce que les zones de support sont constituées par des plaques perforées (9).

7. Cassette selon une ou plusieurs des revendications 1 à 6, caractérisée en ce que les zones de support sont constituées par des plaques profilées.

8. Procédé de cuisson d'ébauches céramiques en cassettes, selon une ou plusieurs des revendications 1 à 7, caractérisé en ce que le chargement du combustible solide (4) s'effectue au cours du parcours des cassettes, entre un poste de chargement et un poste de déchargement.

9. Procédé de cuisson d'ébauches céramiques en cassettes, selon une ou plusieurs des revendications 1 à 8, caractérisé en ce que les cassettes (1) sont débarrassées de leurs cendres par basculement, avant le chargement du combustible solide (4).

10. Procédé de cuisson d'ébauches céramiques en cassettes, selon une ou plusieurs des revendications 1 à 9, caractérisé en ce que au moins quelques-unes des cassettes (1) sont remplies de plus de combustible qu'il ne serait nécessaire pour assurer la cuisson dans ces cassettes (1) et que l'excédent de chaleur sert à la cuisson d'au moins un autre produit céramique.

11. Procédé de cuisson d'ébauches céramiques en cassettes, selon une ou plusieurs des revendications 1 à 10, caractérisé en ce que des quantités et/ou des qualités de combustibles différentes sont réparties dans les différentes cassettes (1).

12. Empilement des cassettes, constitué de fonds de cassettes empilés les uns sur les autres ou les uns à côté des autres, et d'entretoises disposées entre les fonds de cassettes, caractérisé en ce que le combustible solide (4) est disposé entre les fonds de cassettes (2) et les ébauches (3) et que des zones de support (6) sont prévues pour les ébauches (3), au-dessus du combustible solide (4).

FIG. 1

FIG. 3

FIG. 2

FIG. 4

FIG. 6

FIG. 5

FIG. 7

FIG. 8